# EUROPEAN PATENT SPECIFICATION

(11) **EP 0 384 440 B1**
(45) Date of publication and mention of the grant of the patent: **23.08.1995**
(21) Application number: 90103362.1
(22) Date of filing: 21.02.1990
(51) Int. Cl.: B01D 35/26, F02M 37/10, F02M 37/22

(54) **Fuel filtering device**
Vorrichtung zur Filtration von Treibstoff
Dispositif filtrant pour carburant

(30) Priority: 22.02.1989 JP 19938/89 U
(43) Date of publication of application: 29.08.1990
(73) Proprietor: MITSUBISHI DENKI KABUSHIKI KAISHA, Chiyoda-ku Tokyo-to, 100 (JP)
(72) Inventor: Shiraga, Jun, c/o Fukuyama Seisakusho, 1-8, Midorimachi, Fukuyama-shi, 720 (JP); Sato, Isamu, c/o Fukuyama Seisakusho, 1-8, Midorimachi, Fukuyama-shi, 720 (JP)
(74) Representative: MEISSNER, BOLTE & PARTNER

(56) References cited:
- EP-A- 0 384 441
- DE-A- 3 509 309
- DE-A- 3 609 906
- DE-U- 8 603 736
- DE-U- 8 608 099
- US-A- 3 108 065
- US-A- 4 684 463
- US-A- 4 734 008

## Description

This invention relates to a filtering device for a fuel pump which is arranged and used in a fuel tank of vehicles such as an automobile or the like.

US-A-3 108 065 discloses a fuel strainer, whereby a lower end of the tubular strainer element is closed by diametrically flattening the end. The length of the strainer is selected such that it over-extends the distance between the fuel suction line and the bottom wall of the tank, so that the lower closed end of the strainer lies in more or less deflected engagement against the bottom wall of the fuel tank. The strainer body comprises a flexible tube and is absent of any metal reinforcement of its lower closed end.

DE-A-35 09 309 discloses a means to supply fuel from a fuel tank to a combustion engine. A fuel pump located in the fuel tank is surrounded by a noise diffusing element on an outer cylindrical wall thereof. The cylindrical-shaped diffusing element can have a double-walled structure with the annular space therebetween filled with gas. The diffusing element can also be formed of a synthetic resin foam.

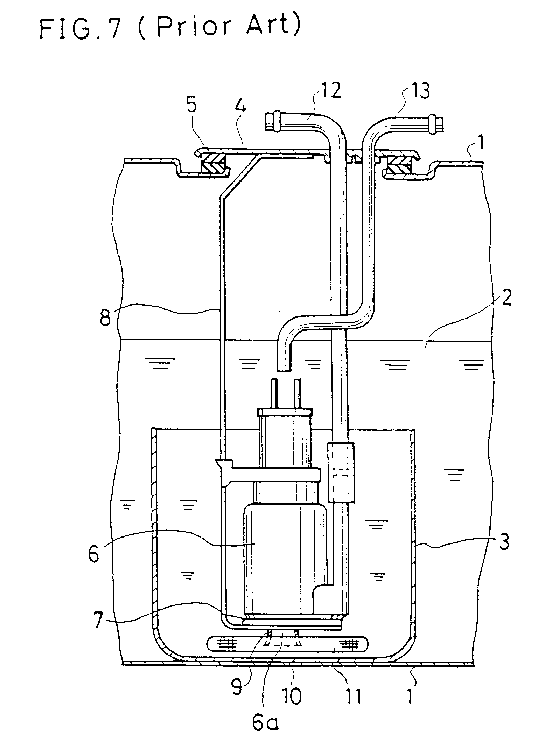

FIG.7 shows an arrangement of a fuel pump and a filtering device as disclosed in Unexamined Published Japanese Utility Model Application No. Sho 55-177059. In the drawing, numeral 1 designates a fuel tank, numeral 2 a liquid fuel accommodated in the fuel tank 1, numeral 3 a subsidiary tank, numeral 4 a plate secured to an upper opening portion of the fuel tank 1 with a sealing packing 5, and numeral 6 an electric-powered in-tank-type fuel pump. The fuel pump 6 is secured to the plate 4 with a vibration absorptive cushioning rubber 7 and arranged off the bottom of the fuel tank 1 by a supporting member 8, such as metal frame. The numeral 9 designates a suction tube secured to a suction hole 6a of the fuel pump 6. A suction opening 10 of the suction tube 9 opens downwardly and sucks the liquid fuel 2 through a filter 11 which is supported by the suction tube 9. A filtering device is constituted of the suction tube 9 and the filter 11. The numeral 12 designates a delivery pipe for feeding the liquid fuel which is pumped out by the rotation of an impeller (not shown) in the fuel pump 6. The numeral 13 designates a return pipe for returning an unemployed portion of the fuel which has been fed to an engine to the fuel tank 1.

In the above-mentioned conventional filtering device, when the fuel level lowers below the suction opening 10 owing to consumption of the fuel 2, the fuel pump 6 can not suck the fuel 2. Thereby, the vehicle can not run even with the fuel remaining in a space between the suction opening 10 and the bottom of the fuel tank 1. In this aspect, it is desirable to arrange the suction opening 10 as close as possible to the bottom of the fuel tank 1 by extending the suction tube 9.

In the conventional filtering device as described above, vibration and noise developed by the fuel pump 6 are fundamentally absorbed by the cushioning rubber 7 and the sealing packing 5. Thus, it is expected that the vibration and the noise are not transmitted to the outside of the fuel tank 1. However, the problem has been that the suction opening 10 faces the bottom of the fuel tank 1 with the filter 11 put therebetween. Accordingly, a noise of friction between the impeller and the bubbles caused by the rotations of the impeller in the fuel pump 6 during the sucking and pumping-out of the fuel 2, or a noise of the rotation of the fuel pump 6 itself propagates through the suction tube 9. And these noises go out from the suction opening 10 to the bottom surface of the fuel tank 1. Since the liquid fuel 2 is a good medium for conducting these noises, the energy conductivity is good, so that these noises considerably vibrate the bottom surface of the fuel tank 1 and develop noises unpleasant to a vehicle driver.

The purpose of the present invention is to provide a filtering device, wherein the sound energy emitted from or produced at the suction opening does not vibrate the bottom surface of the fuel tank, nor generate an unpleasant noise.

In accordance with the present invention, a fuel filtering device is provided as defined in claim 1. Embodiments of the device are given in claims 2 to 5.

The invention will be better understood and appreciated, along with other objects and features thereof, from the following detailed description of embodiments taken in conjunction with the drawings.
FIG. 1 is a cross-sectional side view showing a fuel tank including a fuel filtering device of an embodiment of the present invention.
FIG.2 is a partially enlarged cross-sectional side view of FIG.1.
FIG.3 is a plane view showing a suction tube 15, a supporting member 11a, a diffusing member 16 and a filter 11.
FIG.4 is a partially enlarged cross-sectional side view of FIG.1 as a second embodiment of the present invention.
FIG.5 is a partially enlarged cross-sectional side view of FIG.1 as a third embodiment of the present invention.
FIG.6 is a plane view of FIG.5.
FIG.7 is a cross-sectional side view showing the fuel tank including the conventional fuel filtering device.

It will be recognized that some or all of the Figures are schematic representations for purposes of illustration and do not necessarily depict the actual relative sizes or locations of the elements shown.

Hereafter, preferred embodiments of the present invention are described with reference to the accompanying drawings.

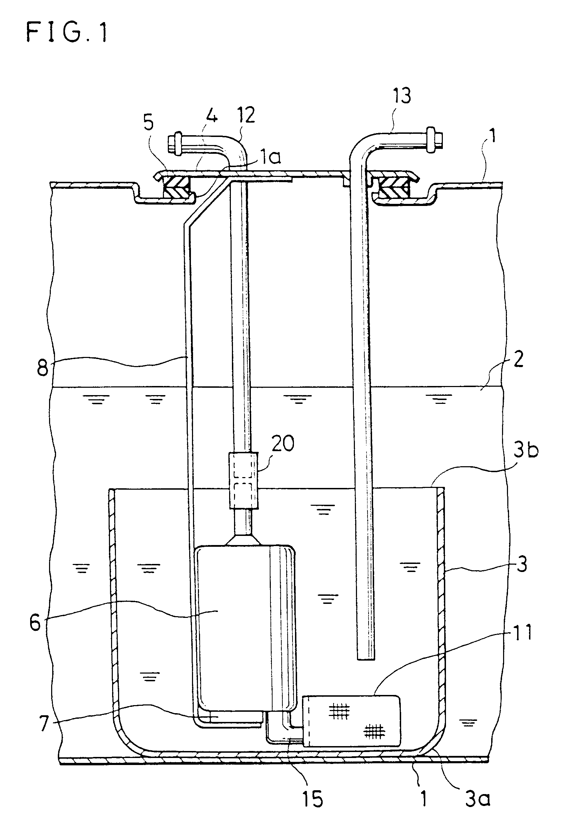

FIG.1 is a cross-sectional side view showing a fuel tank 1 including a fuel filtering device. Although the fuel tank 1 is of generally rectangular shape elongated in the horizontal direction, only a pertinent part thereof to the present invention is shown. In FIG.1, a liquid fuel 2 is stored in the fuel tank 1, and a cup-shaped subsidiary tank 3 is fixed to the fuel tank 1. The subsidiary tank 3 has a hole (not shown), which makes fuel-communication between an inside and an outside of the subsidiary tank 3, at a lower wall part 3a. A plate 4 is secured to an upper opening portion 1a of the fuel tank 1 with a sealing packing 5. An electric-powered in-tank-type fuel pump 6 is secured to the plate 4 with an vibration absorptive cushioning rubber 7 and arranged off the bottom of the subsidiary tank 3 by a supporting member 8 such as metal frame. A delivery pipe 12, which couples with the fuel pump 6 via a rubber hose 20, feeds the liquid fuel 2 which has been pumped out by the rotation of an impeller (not shown) in the fuel pump 6. A return pipe 13 is secured to the plate 4 and is used for returning an unemployed portion of the fuel, which has been fed to an engine (not shown), to the fuel tank 1. A fuel filtering device comprises of a filtrate suction tube 15 and a filter 11. The liquid fuel 2 in the subsidiary tank 3 is sucked into the fuel pump 6 through the filter 11 and the suction tube 15.

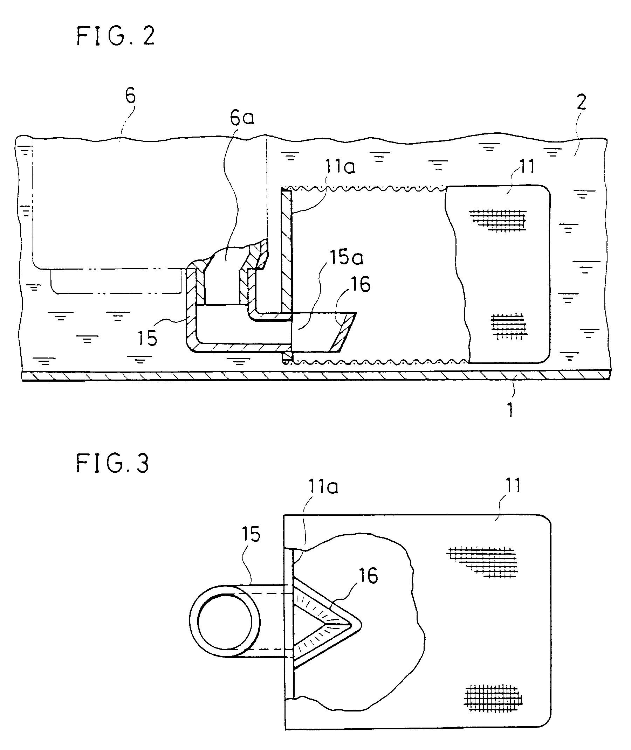

FIG.2 is a partially enlarged cross-sectional view showing the fuel filtering device, and FIG.3 is a plane view showing main parts in FIG.2. A supporting member 11a is provided to keep the filter 11 in a designed shape. An end of the filtrate suction tube 15 is connected to a suction hole 6a, and the other end part penetrating through the supporting member 11a has a suction opening 15a and a diffusing member 16. The suction opening 15a is disposed as close as possible to the bottom of the fuel tank 1, and the diffusing member 16 is obliquely facing the suction opening 15a so as not to reflect a sound wave coming from the suction opening 15a toward the bottom of the fuel tank 1.

In the fuel filtering device of the above-mentioned embodiment, sound waves developed in the fuel pump 6 are emitted out of the suction hole 6a and further emitted out of the suction opening 15a through the suction pipe 15. The sound waves emitted out of the suction opening 15a reach the diffusing member 16. Then, the diffusing member 16 diffuses the sound waves and reflects them in various directions other than the direction toward the bottom surface of the fuel tank 1. Therefore, the bottom of the fuel tank 1 does not receive the sound wave noise and is not vibrated, and hence the fuel tank 1 does not make an unpleasant noise.

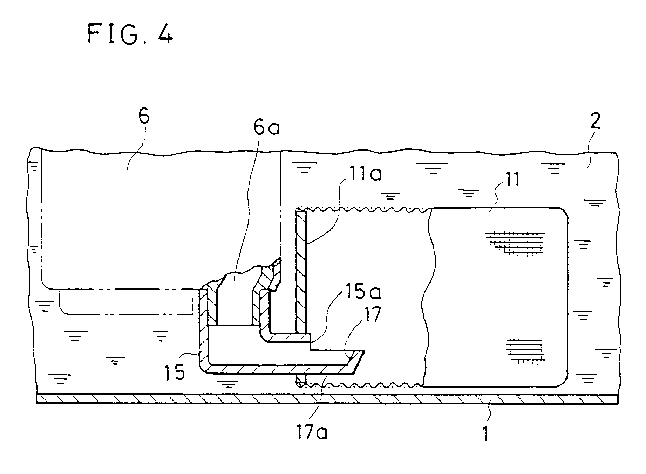

FIG.4 is a cross-sectional view showing the fuel filtering device of a second embodiment. In the figure, the numerals 1, 6, 6a, 11, 11a, 15 and 15a designate similar parts which are designated by these numerals in the above-mentioned first embodiment. A diffusing member 17 is provided to obliquely face the suction opening 15a, thereby reflecting the sound wave away from the bottom surface of the fuel tank 1. Between the suction opening 15a and the diffusing member 17, a shielding plate 17a is provided so as to shield against lateral propagation of sound waves emitted from the suction opening 15a to the bottom surface of the fuel tank 1.

In this embodiment, since the sound wave noise, which is emitted from the suction opening 15a and propagates downwardly, is shielded by the shielding plate 17a, transmission of sound waves to the bottom of the fuel tank 1 can be reduced further.

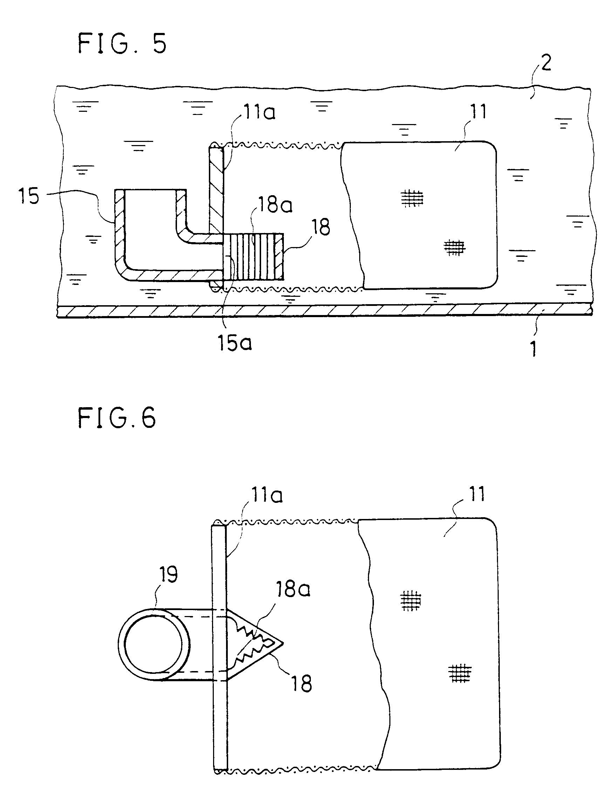

FIG.5 is a cross-sectional view showing the fuel filtering device of a third embodiment, and FIG.6 is a plan view of FIG.5. In these figures, the numerals 1, 11, 11a, 15 and 15a designate similar parts which are designated by these numerals in the above-mentioned first embodiment. A diffusing member 18 is vertically provided to obliquely face the suction opening 15a, and an inner surface of the diffusing member 18 is formed to have a saw-tooth-shaped concave and convex structure 18a extended in the vertical direction.

In this third embodiment, the sound wave noise which is emitted from the suction opening 15a is scattered by the irregularity of the concave and convex structure 18a, such that the reflected sound waves are not concentrated in a particular direction. Therefore, undesirable vibration of the fuel tank 1 due to reception of the concentrated noise is eliminated.

## Claims

1. A fuel filtering device suitable for use with a fuel pump when the filtering device and fuel pump are mounted in a fuel tank to feed liquid fuel to an engine, said fuel filtering device comprising:
a filtrate suction tube (15) connectable to a suction hole of the fuel pump; and
a filter (11) through which said liquid fuel is sucked into said filtrate suction tube (15);
**characterized in that**
a noise diffusing member (16, 17, 18) is provided obliquely facing a suction opening (15a) of said filtrate suction tube (15), whereby the diffusing member is arranged to diffuse sound waves, when the fuel filtering device is in use, which propagate through the filtrate suction tube (15) towards the filter (11), so as not to reflect sound waves coming from the suction opening (15a) toward the bottom of the fuel tank; and
said filter (11) is arranged to enclose said diffusing member (16, 17, 18) and said suction opening (15a).

2. A fuel filtering device in accordance with claim 1, wherein said noise diffusing member (18) has an irregularly finished surface for diffusing said sound waves.

3. A fuel filtering device in accordance with claim 1, wherein a shielding plate (17a) is disposed between said suction opening (15a) and the diffusing member (17) so as to partially shield against lateral propagation of sound waves emitted from the suction opening (15a).

4. A fuel filtering device in accordance with any one of the preceding claims, wherein in top view said noise diffusing member (16, 17, 18) is triangularly shaped.

5. A fuel filtering device in accordance with claim 2 or 4, wherein said irregularly finished surface (18a) of the noise diffusing member (18) is either concave or convex.

## Patentansprüche

1. Kraftstoffiltervorrichtung, die zur Verwendung mit einer Kraftstoffpumpe geeignet ist, wenn die Filtervorrichtung und die Kraftstoffpumpe in einem Kraftstoffbehälter angebracht sind, um einer Brennkraftmaschine Flüssigkraftstoff zuzuführen, wobei die Kraftstoffiltervorrichtung folgendes aufweist:
ein Filtratsaugrohr (15), das mit einer Saugöffnung der Kraftstoffpumpe verbindbar ist; und
einen Filter (11), durch den der Flüssigkraftstoff in das Filtratsaugrohr (15) angesaugt wird;
**dadurch gekennzeichnet, daß**
ein Geräuschverteilungselement (16, 17, 18) einer Saugöffnung (15a) des Filtratsaugrohrs (15) schräg zugewandt vorgesehen ist, so daß das Verteilungselement angeordnet ist, um, wenn die Kraftstoffiltervorrichtung in Gebrauch ist, Schallwellen zu verteilen, die sich durch das Filtratsaugrohr (15) in Richtung zu dem Filter (11) ausbreiten, damit von der Saugöffnung (15a) kommende Schallwellen nicht in Richtung des Bodens des Kraftstoffbehälters reflektiert werden; und
der Filter (11) angeordnet ist, um das Verteilungselement (16, 17, 18) und die Saugöffnung (15a) zu umschließen.

2. Kraftstoffiltervorrichtung nach Anspruch 1, wobei das Geräuschverteilungselement (18) eine unregelmäßig bearbeitete Oberfläche hat, um die Schallwellen zu verteilen.

3. Kraftstoffiltervorrichtung nach Anspruch 1, wobei eine Abschirmplatte (17a) zwischen der Saugöffnung (15a) und dem Verteilungselement (17) angeordnet ist, um eine teilweise Abschirmung gegen seitliche Ausbreitung von aus der Saugöffnung (15a) emittierten Schallwellen zu bilden.

4. Kraftstoffiltervorrichtung nach einem der vorhergehenden Ansprüche, wobei das Geräuschverteilungselement (16, 17, 18) in Draufsicht Dreieckgestalt hat.

5. Kraftstoffiltervorrichtung nach Anspruch 2 oder 4, wobei die unregelmäßig bearbeitete Oberfläche (18a) des Geräuschverteilungselements (18) entweder konkav oder konvex ist.

## Revendications

1. Dispositif filtrant pour carburant qui convient pour l'utilisation avec une pompe de carburant lorsque le dispositif filtrant et la pompe de carburant sont montés dans un réservoir de carburant pour amener le carburant liquide vers un moteur, ledit dispositif filtrant pour carburant comprenant :
un tube d'aspiration de filtrat (15) pouvant être relié à un trou d'aspiration de la pompe de carburant ; et
un filtre (11) à travers lequel ledit carburant liquide est aspiré dans ledit tube d'aspiration de filtrat (15) ;
caractérisé en ce que
un élément de diffusion de bruits (16, 17, 18) est prévu en étant orienté en biais vers un tube d'aspiration (15a) dudit tube d'aspiration de filtrat (15), par quoi l'élément de diffusion est agencé pour diffuser des ondes sonores lorsque le dispositif filtrant pour carburant est en utilisation qui se propagent à travers le tube d'aspiration de filtrat (15) vers le filtre (11) de façon à ne pas réfléchir des ondes sonores provenant de l'ouverture d'aspiration (15a) vers le fond du réservoir de carburant ; et
ledit filtre (11) est agencé pour enfermer ledit élément de diffusion (16, 17, 18) et ladite ouverture d'aspiration (15a).

2. Dispositif filtrant pour carburant selon la revendication 1, dans lequel ledit élément de diffusion de bruit (18) présente une surface finie irrégulière pour diffuser lesdites ondes sonores.

3. Dispositif filtrant pour carburant selon la revendication 1, dans lequel une plaque formant écran (17a) est disposée entre ladite ouverture d'aspiration (15a) et l'élément de diffusion (17) de façon à former un écran partiel contre une propagation latérale des ondes sonores émises par l'ouverture d'aspiration (15a).

4. Dispositif filtrant pour carburant selon l'une des revendications précédentes, dans lequel, vu de dessus, ledit élément de diffusion de bruit (16, 17, 18) a une forme triangulaire.

5. Dispositif filtrant pour carburant selon la revendication 2 ou 4, dans lequel ladite surface finie irrégulière (18a) de l'élément de diffusion de bruit (18) est soit concave soit convexe.
